# EUROPEAN PATENT APPLICATION

(11) **EP 1 744 252 A2**
(43) Date of publication of application: **17.01.2007**
(21) Application number: 06250965.8
(22) Date of filing: 23.02.2006
(51) Int. Cl.: G06F 15/78

(54) **Reconfigurable LSI**

(30) Priority: 05.07.2005 JP 2005196865
(71) Applicant: Fujitsu Ltd., Kawasaki-shi, Kanagawa 211-8588 (JP)
(72) Inventor: Odate, Naoki, Kawasaki-shi Kanagawa 211-8588 (JP); Yoda, Katsuhiro, Kawasaki-shi Kanagawa 211-8588 (JP); Nishijima, Seiichi, Kawasaki-shi Kanagawa 211-8588 (JP); Shoji, Kazuhiko, Kawasaki-shi Kanagawa 211-8588 (JP)
(74) Representative: Hitching, Peter Matthew

(57) **Abstract**

A reconfigurable LSI which can actualize a plurality of functions by reconfiguration based on configuration information, comprises at least a plurality of arithmetic processing modules (3), has state information for indicating the transition of the function from a previous state to a next state, transition condition information for indicating the condition for transitioning from the previous state to the next state, and output information for switching the connection between the arithmetic processing module(3) corresponding to the transition condition and the data network connected to the arithmetic processing module(3), and has a reconfiguration control circuit which transmits the output information corresponding to the next state to a selector (8) for switching between the arithmetic processing module(3) and the data network when the conditions for transition are received from the arithmetic processing module(3) and matches the condition of the transition condition information.

## Description

### Background of the Invention

### Field of the Invention

The present invention relates to a technology for controlling the state transition of a reconfigurable integrated circuit.

### Description of the Related Art

Conventionally, in a reconfigurable LSI (integrated circuit) having a reconfigurable circuit or the like, in order to actualize a transmission method, for example, a desired transmission is actualized by writing a transmission method application required by the user to a reconfigurable circuit such as an LSI comprising a plurality of computing units and a fine-grain Field Programmable Gate Array (FPGA).

These reconfigurable circuits, such as the reconfigurable LSI, comprise a plurality of arithmetic processing modules. Furthermore, one arithmetic processing module comprises a plurality of arithmetic units and can programmably change function. In addition, when programmably changing the function of the arithmetic processing module provided in the LSI, data (application and the like) is transferred to the arithmetic processing module via a processor provided within the LSI and is saved in a configuration memory provided within the arithmetic processing module. Subsequently, each arithmetic processing module overwrites the functions with contents suited to the application based on the configuration data (configuration information) saved in the configuration memory and the application is executed.

According to Japanese Patent Publication No. 2001-44882, a software wireless device composed of an antenna control, a wireless signal processing unit, a signal processing unit, and an external interface unit is proposed, wherein each unit houses a processor and flexible response to module changes is made possible by providing an interface part between each unit. According to Japanese Patent Publication No. 2002-291011, a software module in which a memory device is stored is proposed, wherein varying systems can be handled by providing FPGS and PLD. In addition, according to Japanese Patent Publication No. 2004-343559, a data processing device having a database wherein a plurality of configuration data is stored in a reconfigurable processor and a reconfigurable LSI unit having a control unit enabling selection of transmission methods is proposed.

However, reconfigurable LSI which requires complicated signal processing and control must programmably handle a plurality of methods, for example, by changing the operation mode of the arithmetic processing module or switching the connection between arithmetic processing modules for software wireless capability and the like.

In addition, in reconfigurable LSI, such as those of Patent References 1 to 3, when changing the hardware configuration via the processor while executing a processing, reconfiguration takes time and precise control, such as autonomous self-reconfiguration of the LSI, cannot be performed.

Furthermore, there is a problem in that using a single reconfigurable LSI does not necessarily fulfill processing performance.

### Summary of the Invention

The present invention can autonomously change arithmetic processing according to a desired sequence by providing a circuit having a state machine for switching the arithmetic processing mode and by internally writing output information corresponding to state information and a transition condition for each transition state.

Furthermore, an object of the present invention is to provide a reconfigurable LSI having a reconfiguration control circuit which enhances processing capacity by connecting via multiple-chip connections a plurality of reconfigurable LSIs of the above-mentioned configuration.

A reconfigurable LSI of one embodiment of the present invention which can actualize a plurality of functions by reconfiguration based on configuration information, comprises at least a plurality of arithmetic processing modules, has state information for indicating the transition of the function from a previous state to the next state, transition condition information for indicating the condition for transitioning from the previous state to the next state, and output information for switching the connection between the arithmetic processing module corresponding to the transition condition and the data network connected to the arithmetic processing module, and has a reconfiguration control circuit which transmits the output information corresponding to the next state to a selector for switching between the arithmetic processing module and the data network when the conditions for transition are received from the arithmetic processing module and matches the condition of the transition condition information.

Preferably, this reconfiguration control circuit has a memory and can be configured such as to store the next state information in the address direction, store the transition condition information and the output information in a first memory in the bit direction corresponding to the next-state information, read out the transition condition information and the output information corresponding to the next-state information with the same previous state from the first memory and store it in a second memory every time a reconfiguration is started, and transmit the output information of the corresponding second memory to the selector for switching between the arithmetic processing module and the data network when the condition for transition is received from the arithmetic processing module and matches the transition condition in the second memory.

In addition, preferably, transition condition enable information can be provided for at least every condition composing the transition condition information and every output condition composing the foregoing output information and the condition wherein the transition condition enable information is enabled can be the condition of the next state or the output condition.

In addition, an enable bit can be provided to indicate whether the next-state information, transition condition information, and output information stored in each address of the first memory are enabled or disabled. If the enable bit is enabled, the next-state information, transition condition information, and output information within this address are enabled and, if the enable bit is disabled, the next-state information, transition condition information, and output information within this address are disabled.

In addition, the next-state information, transition condition information, and output information stored in the first memory can be grouped according to the next-state information with the same previous state; transition condition enable information can be provided for at least every condition composing transition condition information and every output condition composing output information for every group; the condition wherein the transition condition enable information is enabled is the condition to the next state or the output condition; and the enable bit can be provided to indicate whether the next-state information, transition condition information, and output information stored at each address of each group are enabled or disabled. If the enable bit is enabled, the next-state information, transition condition information, and output information within this address are enabled and, if the enable bit is disabled, the next-state information, transition condition information, and output information within this address are disabled.

Furthermore, this arithmetic processing module can be constructed to transmit an ACK signal for notifying the reconfiguration control circuit that a transition to the next state has been completed. By this construction, the configuration of the LSI can be autonomously controlled according to the sequence desired by the user by programmable setting data and circuit scale can be reduced compared to a general-use state transition circuit having similar functionality.

The reconfigurable LSI of one embodiment of the present invention which can actualize a plurality of functions by reconfiguration based on configuration information uses, in a multiple-chip configuration, reconfigurable LSI comprising at least a plurality of arithmetic processing modules, having state information for indicating the transition of the function from a previous state to the next state, transition condition information for indicating the condition for transitioning from the previous state to the next state, and output information for switching the connection between the arithmetic processing module corresponding to the transition condition and the data network connected to the arithmetic processing module, and having a reconfiguration control circuit which transmits the output information corresponding to the next state to a selector for switching between the arithmetic processing module and the data network when the condition for transition is received from the arithmetic processing module and matches the condition of the transition condition information.

Preferably, this reconfigurable LSI can be divided into a master-side and slave-side. The reconfiguration control circuit on the master-side and the reconfiguration control circuits on respective slave-sides are connected, and the reconfiguration control circuit on the master-side can provide transition instructions to the slave-side.

Preferably, the reconfiguration control circuit on the master-side and the reconfiguration circuits on the slave-side at least transmit transition condition information and output information from the reconfiguration control circuit on the master-side to the reconfiguration control circuits on the slave-side, receive transition condition information and output information in the reconfiguration circuits on the slave-side, and transition the selector for switching between the arithmetic processing module and the data network within the reconfigurable LSIs on the slave-side to the next state based on each received information.

Preferably, the arithmetic processing module within the reconfigurable LSIs on the slave-side can transmit an ACK signal for providing notification that transition to the next state has been completed to the reconfiguration circuit on the slave side and can transmit a slave-side transition completion notification ACK signal for providing notification that all transitions on the slave-side have been completed to the reconfiguration control circuit of the reconfigurable LSI on the master-side after the reconfiguration control circuit receives the ACK signal.

Preferably, the ACK signal and the slave transition completion notification ACK signal can share a line for transmitting transition condition information and output information.

Preferably, if there is a plurality of transition conditions, the transition can be performed when any one condition is met.

Preferably, if a plurality of transition conditions is met simultaneously, the condition written to the higher-order address can be prioritized, transition can be performed to this state, and the output information can be outputted; and the current state can be maintained if there are no matches to any conditions.

Preferably, the reconfigurable LSI can ignore transition conditions matching during a reconfiguration and can enable the transition condition after the reconfiguration is completed when the transition conditions match during a reconfiguration.

By this construction, arithmetic processing of a large-scale application can be executed efficiently by adopting a multiple-chip configuration using a plurality of reconfigurable LSIs.

According to the present invention, the configuration of the reconfigurable LSI can be controlled autonomously and efficiently according to a desired sequence, and additionally, the circuit scale can be reduced in comparison with general-use state transition circuits having similar functionality. Furthermore, by employing multiple connections arithmetic processing of a large-scale application can be executed efficiently.

### Brief Description of the Drawings

Fig. 1 is a diagram showing an internal block of an LSI;
Fig. 2 is a block diagram of a reconfiguration control operation;
Fig. 3 is a diagram showing a configuration of a reconfiguration control circuit by memory;
Fig. 4 is a diagram showing a memory bit allocation;
Fig. 5 is a diagram showing reconfiguration control timing;
Fig. 6 is a diagram showing a configuration when transmitting as IEEE802.11a;
Fig. 7 is a diagram showing the flow when transmitting as IEEE802.11a;
Fig. 8 is a diagram showing a configuration when receiving as IEEE802.11a;
Fig. 9 is a diagram showing the flow when receiving as IEEE802.11a;
Fig. 10 is a diagram showing a configuration when employing multiple chips;
Fig. 11 is a diagram showing master/slave control flowchart; and
FIG. 12 is a diagram showing a master/slave control time chart.

### Description of the Preferred Embodiments

The preferred embodiments of the present invention are explained in detail below, based on the drawings.

### (First Embodiment)

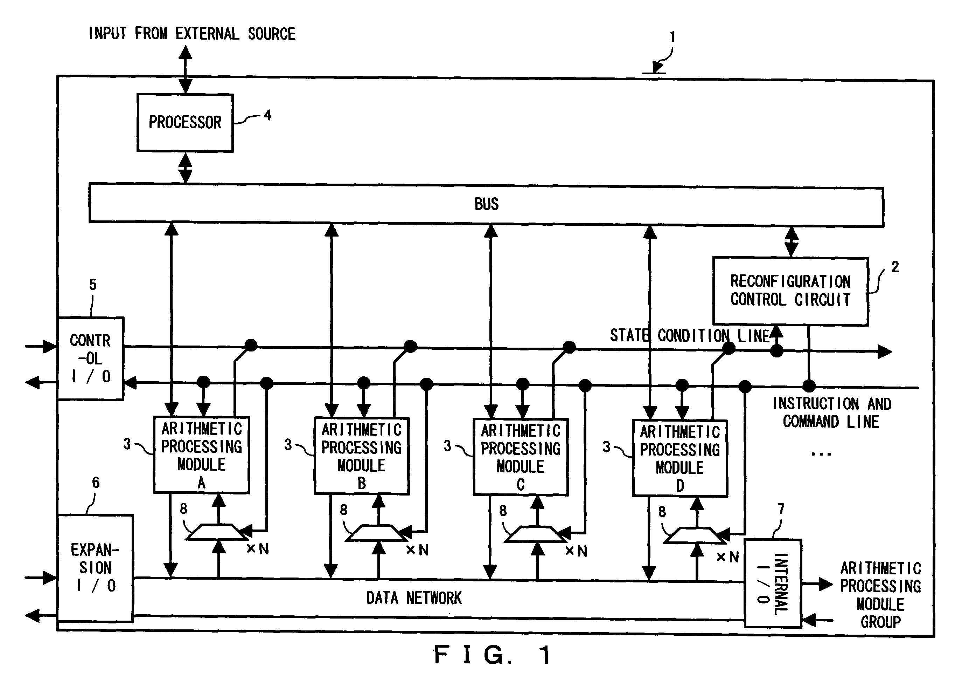

Fig. 1 is a diagram showing the internal blocks of a reconfigurable LSI 1. The reconfigurable LSI 1 comprises a reconfiguration control circuit 2, an arithmetic processing module 3, a processor unit 4, a control interface unit 5 (control I/O), an expansion interface 6 (expansion I/O), an internal interface unit 7 (internal I/O), etc.

The reconfiguration control circuit 2 generates output information and transmits various control signals to each arithmetic processing module 3 (A to D in Fig. 1: arithmetic processing module group) via an instruction and command line, based on information for reconstruction stored within the reconfiguration control circuit 2 by receiving an input signal indicating transition conditions from each arithmetic processing module 3 via a state condition line. Each arithmetic processing module 3 which has received a control signal transitions to the next state and reconfigures the operation mode or the connection between arithmetic processing modules.

In addition, setting data indicating transition state is written to the reconfigurable LSI 1 from an external device (such as a PC) via the processor unit 4, by bus.

The arithmetic processing module 3 writes configuration data, from the external device via the processor unit through a bus, necessary for running an application in the configuration memory (not shown) within the arithmetic processing module 3 and performs reconfiguration based on the configuration data. Reconfiguration of the connection between arithmetic processing modules 3 is performed by changing the connection with a selector 8 connected to the data network shown in this same diagram. Additionally, reconfiguration of the operation mode, explained above, is, for example, to transition the state from a transmission mode to a reception mode in a wireless LAN. When changing the operation mode as such, the contents of the plurality of arithmetic units (not shown) comprised in the arithmetic processing module 3 are changed based on the configuration data.

The user writes data in the processor unit 4 from an external device. Configuration data is written to the arithmetic processing module 3 via a bus. Additionally, setting data is written to the reconfiguration control circuit 2 in the same way. When writing, the appropriate data are written to the reconfiguration control circuit 2 and respective arithmetic processing modules 3 due to the processor unit 4 performing control, such as by allocating a write destination.

The control interface 5 is connected to a line shown in this same diagram for transferring the state conditions and information, such as instructions and commands, between the reconfiguration control circuit 2 and respective arithmetic processing modules 3. The state condition line is a line for transmitting transition condition signals (such as transition condition information) in order to notify the reconfiguration control circuit 2 of the current state of respective arithmetic processing modules 3. The instruction and command line is a line for transmitting state transition control signals (output information) generated based on transition condition signals to respective arithmetic processing modules 3. This is also implemented when using the reconfigurable LSI 1 in a plural connection (multiple chips), described hereafter.

Next, the afore-mentioned data network is a line for leading input and output signals and control signals into the reconfigurable LSI 1 via the expansion interface unit 6. The input and output signals here refer, for example, to transmission and reception signals in a wireless LAN. The control signals are signals for performing control of the wireless LAN, and are the control signals generated in an external control circuit, for example.

The data network including the afore-mentioned input and output signal and control signal line has a line for input which passes through the selector 8 and a line for output to connect each arithmetic processing module3. Instructions for performing switching according to the operation mode are transmitted from the reconfiguration control circuit 2 to the selector 8 provided on the line for input, via the instruction and command line, and the selector 8 is switched. Here, the selector 8 can be provided on the line for output and switching of the output line can be performed, as well.

Next, the internal interface unit 7 connected to the data network exists to perform connection with other arithmetic processing module groups, not shown. If there are other arithmetic processing module groups aside from the arithmetic processing modules 3 (A to D: arithmetic processing module group) shown in this same diagram, space for the line section configuring the data network must be secured within the reconfigurable LSI when the data network is connected to all of the other arithmetic processing modules 3. Therefore, only the lines required by each arithmetic processing module group are connected. For example, an input signal line is not provided beyond the internal interface unit 7 if the input signal is not used in other arithmetic processing modules 3.

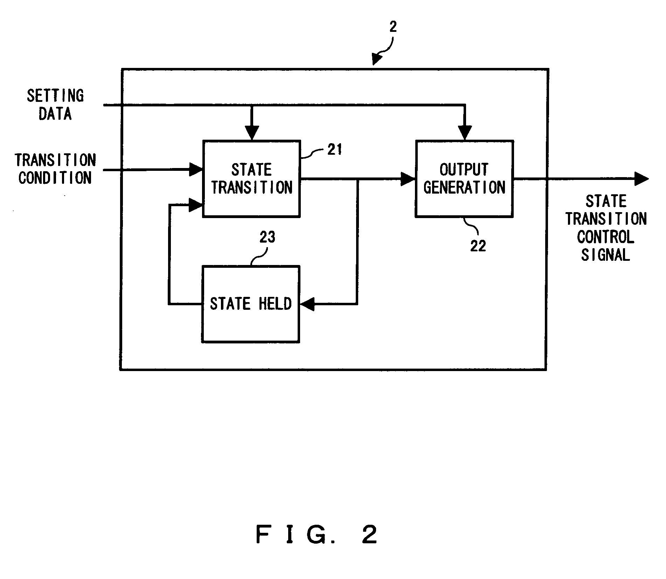

Fig. 2 is a diagram showing an operation of the reconfiguration control circuit 2 which comprises a state transition unit 21, an output generation unit 22, and a state holding unit 23. The setting data shown in this diagram is data output from the processor unit 4, described above. The state condition data is data transmitted from each arithmetic processing module 3. The state transition control signal is output data generated in the reconfiguration control circuit 2.

The state transition unit 21 holds the state of the setting data and the information on the transition conditions. The output generation unit 22 holds the output information at each state of the setting data.

As an explanation of the general outline of the operation, the functions of each arithmetic processing module 3 must be changed and the data network connection must be switched with the transition of the operation mode when the operation mode transit to the next operation mode (for example, switch from transmission processing to reception processing). Each arithmetic processing module 3 notifies the reconfiguration control circuit 2 of transition condition information from the current state to the next state, via the transition condition line. Here, transition condition information is data outputted from the arithmetic processing module 3 and notifying the reconfiguration control circuit 2.

When the transition condition is inputted to the reconfiguration control circuit 2, it is compared with the transition condition held in the state transition unit 21. When transitioning to the next state, data corresponding to the output information held in the output generation unit 22 is output as a state transition control signal. In addition, when there is no transition, the current state is held by the state holding unit 23. A programmable state machine is configured by a method implementing the reconfiguration control circuit 2 as described above.

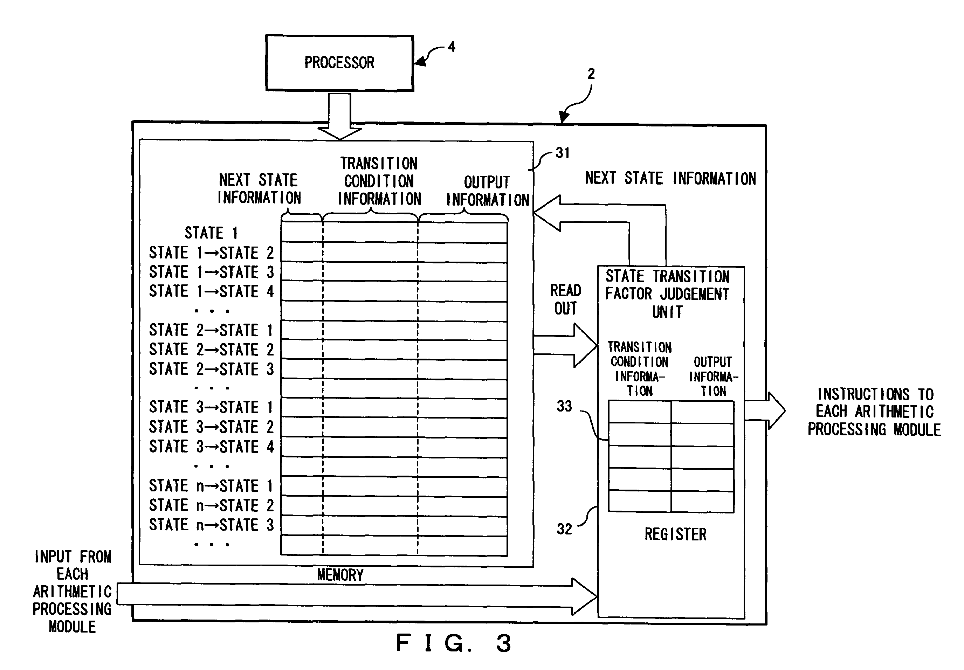

Fig. 3 shows a configuration of the reconfiguration control circuit 2 by memory. For example, it shows when the internal state is an N number of states (N: integer). If the internal state is an N number of states, there is a maximum of N ways of transition from the previous state, including the previous state itself. Therefore, N-words of memory is provided for one state and next-state information, transition condition information, and output information are stored as data within the address. In the present example, the setting data is written from the processor 4 to the memory 31 (first memory) via the bus and next-state information, transition condition information, and output information are stored.

In a state transition circuit using memory such as that in this diagram, the state is stored in the address direction and the transition condition and the output information are stored in the bit direction.

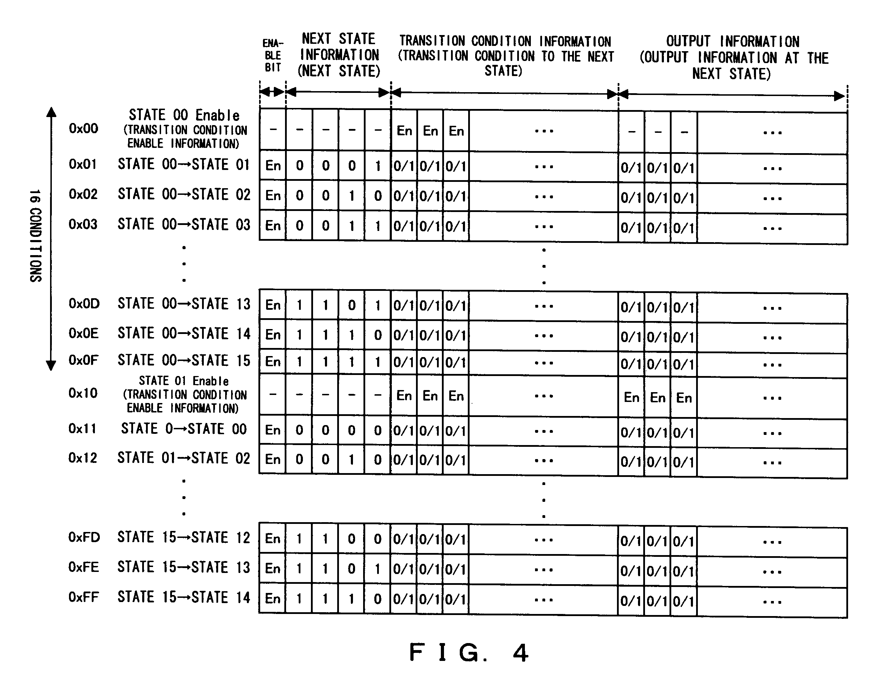

The configuration of the memory 31 is explained below. Fig. 4 is a diagram showing the bit allocation of the memory. This is an example wherein the internal state is 16 states and there is a maximum of 16 ways to transition from one state, including the current state.

16-words of memory are provided for one state, and the next-state information, transition condition information, and output information are stored at the address as data.

Addresses 0 to 255 (0x00 to 0xFF) are provided in the memory 31 as addresses. Each address indicates a next state. In Fig. 4, the next state is shown within the bit range indicated by the double-ended arrow of the subsequent state. In the present example, the states 00 to 15 are shown in binary numbers as 0x0000b to 0x1110b. State 01 is shown as 0x0001b and state 02 is shown as 0x0010b. The next state is written by setting data.

Next, the condition for performing a transition is written to the range of transition conditions for the next state indicated by the double-ended arrow from the setting data. Here, conditions refer to arithmetic processing results and connection states necessary for each arithmetic processing module 3, the data network, and the selector 8 to change the transition state, namely, to switch operation modes, indicated by '0' or '1'.

A condition is assigned to each bit in the range of transition conditions for the subsequent state. For example, m-bits of conditions 1 to m (m: integer) are provided and a '0' or a '1' is written to each condition. It is set in advance, such that the condition is not met when it is '0' and the condition is met when it is '1'.

In addition, the output information at the next state indicated by the double-ended arrow is data for converting information necessary for transitioning to the next state into a state transition control signal and outputting this signal. Setting data is written to each bit of the output information. The information necessary for transitioning the state is indicated by a '0' or a '1' in each bit. Here, the information indicated by each bit of the output information is information for changing the state of respective arithmetic processing modules 3, the data network, or the selector 8. If it is an arithmetic processing module 3 transition, the information is trigger information for changing the calculation content of the arithmetic unit or changing the connection between arithmetic units. If it is the data network, the information is trigger information for changing the connection to respective arithmetic processing modules 3 by controlling the selector 8.

However, transition condition enable information (En in Fig. 4) for each condition of the transition conditions is stored in the 16-word initial address (0x00: state 00 Enable; 0x10: state 01 Enable; etc) and only the conditions which are transition condition enabled become transition conditions to the next state. In addition, an enable bit (En in Fig. 4) is added to the initial bit of each address to indicate whether the information written to this address is enabled. Respective information within an address wherein the enable bit is '0' is disabled and state transition is not performed. If the enable bit is '1', the information is enabled and the state transition is performed.

Next, a state transition factor judgment unit 32 reads out the transition condition information and output information from the memory 31 and holds these in register 33 (second memory: comprises memory or flip-flop).

In the present example, 16 cycles are required to read out the transition condition information and the output information from the memory 31. The previous state is held until readout from the internal memory is completed and the judgment of the transition conditions is made after completion of readout. Additionally, state transition is not performed when output is performed as Enable = '1' during state transition, until a reconfiguration completion ACK (ACKnowledgement) signal, described hereafter, is inputted.

Next, when the 15 independent transition condition information (excluding transition to current state) stored in the register 33 are compared with the transition conditions received from each arithmetic processing module 3 and if it matches any one of the transition conditions, the output information corresponding to the address of the matching transition condition is selected and the output information is transferred to each arithmetic processing module 3 by state transition control signals.

Here, if there is a plurality of transition conditions (if the bits of plural transition conditions are set to '1'), transition is performed when any one of the conditions is fulfilled. In addition, if the transition conditions for a plurality of states are fulfilled simultaneously, the condition written to the higher order address is prioritized, transition to this state is performed, and output information is output. If none of the conditions match, the current state is maintained.

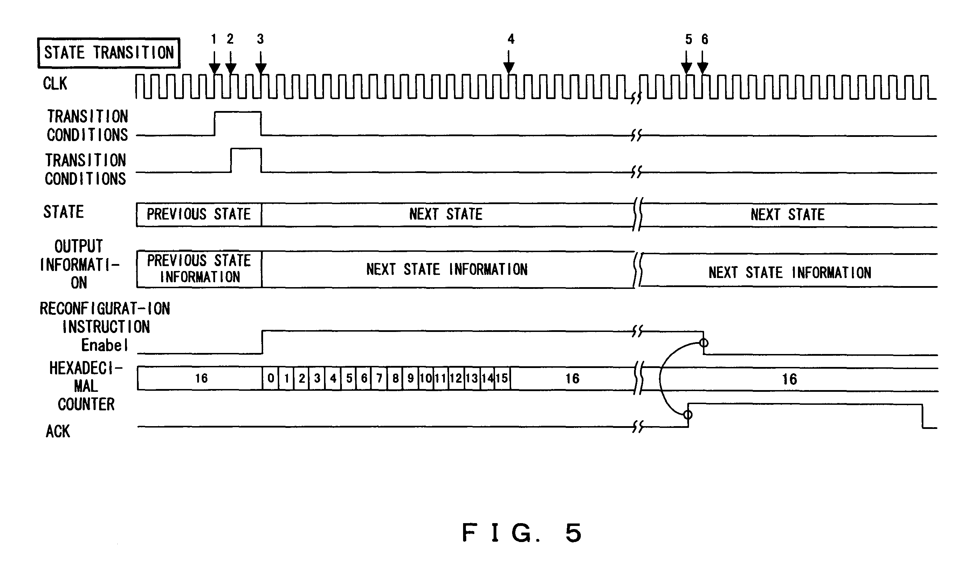

Fig. 5 shows a timing chart of the reconfiguration control circuit 2. The CLK in this diagram is the system clock of the reconfigurable LSI or the like and the state transitions synchronously with this clock. Since the condition for transitioning to the next state matches at CLK 1 (rising edge of the clock), the signal shown in the transition conditions in the diagram changes from "low" to "high".

Additionally, at CLK 2, the signal shown in the transition condition (Retim) changes from "low" to "high" in order to improve the accuracy of validity of the condition match one cycle later, and at CLK 3 the transition condition and the transition condition (Retim) are held "low".

Additionally, in order to transition the current state to the next state by CLK 3, the transition conditions output from the register 33 within the state transition factor judgment unit 32 and each arithmetic processing module 3 are compared, 15 different states are inspected and judged, and the output information is selected. Furthermore, the state transition control signal (output information) is transmitted to respective arithmetic processing modules 3. At the same time, the reconfiguration instruction Enable signal is changed from "low" to "high".

The processing for performing reconfiguration from the previous state to the next state starts between CLK 3 and CLK 4. When the next state is determined, the reconfiguration of respective arithmetic processing modules 3, the data network, and the selector 8 begins.

Immediately after CLK 3, the readout of the transition condition and the output information of the next state from the memory 31 starts in register 33 of the state transition factor judgment unit 32. The hexadecimal counter shown in this diagram is provided to count the 16 cycles required for readout, is reset at CLK 3, and counts to 16.

For example, when transitioning from state 00 to state 01, the memory contents of addresses 0x10 to 0x1F shown in Fig. 4 in the next state, state 01, are overwritten to the register wherein the contents of 0x00 to 0x0f of the current state 00 are written. In the present example, 16 cycles are required from the readout of this data from the memory 31 to the writing to the register 33.

Subsequently, when all reconfigurations have been completed at CLK 4, ACK signals are returned from each arithmetic processing module 3 and a reconfiguration completion notification is transmitted. Here, the ACK signal can be provided with a line for ACK signals or can use the state condition line. Additionally, since the reconfiguration of selector 8 is performed earlier than that of the arithmetic processing module 3, the ACK signal for the selector 8 is not shown in the present example. Naturally, an ACK signal for selector 8 switching completion can also be provided.

When the ACK signal changes to "high" and the reconfiguration completion notification is received at CLK 5, the reconfiguration instruction Enable changes to "low" and the arithmetic processing of the operation mode of the reconfigured state is maintained.

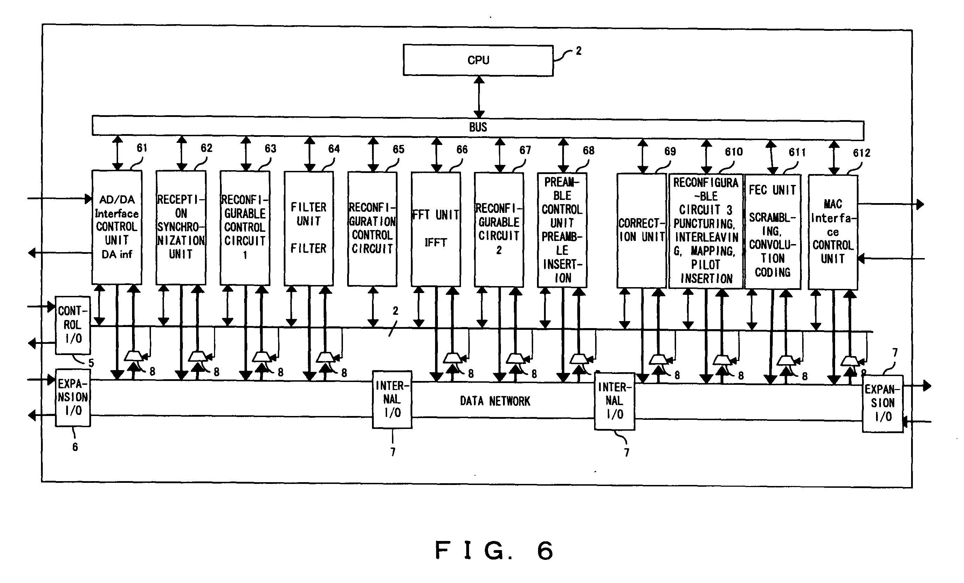

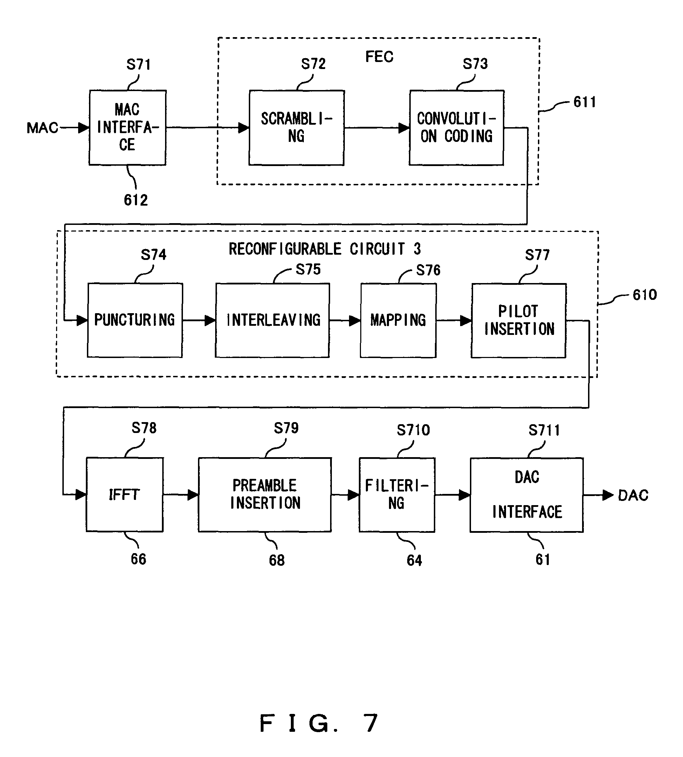

Fig. 6 and Fig. 7 show an example of a reconfigurable LSI to which an IEEE802.11a application which is a wireless LAN transmission method is installed.

The state information from each arithmetic processing module 3 is received by the reconfiguration control circuit 2 and an instruction for transition to a reception state and transition to a transmission state is given based on this information. Each arithmetic processing module 3 receives this instruction, switches the operation mode, changes the connection between modules, and performs transmitting and receiving operations.

Fig. 6 to Fig. 9 show block diagrams and operations of the above-mentioned configuration with regards to a wireless LAN. Fig. 6 is a diagram showing the functions of each arithmetic processing module 3 when transmitting as IEEE802.11a.

Each arithmetic processing module 3 has a function comprising an AD/DA interface control unit 61, a reception synchronization unit 62, a reconfigurable circuit1 63, a filter unit 64, a reconfiguration control circuit 65, an FFT unit (Fast Fourier Transform) 66, a reconfigurable circuit2 67, a preamble control unit 68, a correction unit 69, a reconfigurable circuit3 610, an FEC (Forward Error Correction) unit 611, and a MAC (Media Access Control address) interface unit 612, respectively.

When transmitting, excluding specific instances (such as at the time of start-up or completion), the state generally transitions from reception to transmission. Each arithmetic processing module 3 shown in Fig. 6 shows the state of each unit when transitioning from the reception state to the transmission state.

The state of the afore-mentioned respective arithmetic processing modules 3 is, for example, set in advance such that the reception state is state 02 and the transmission state is state 01. As shown in Fig. 4, if the transition condition for the next state in the transition from state 02 to state 01 is met, the corresponding output information is selected and the state transition control information is output to each arithmetic processing module 3. Then, each arithmetic processing module 3 receives the output information for transition to transmission included in the state transition control signal and transitions to the subsequent state. The MAC interface unit 612 holds the state of the arithmetic processing module 3 in the MAC control function in order to transmit. The FEC unit 611, transitions in order to execute a scrambling function and a convolution coding function. The reconfigurable circuit 3 610 transitions in order to execute a puncturing function, an interleaving function, a mapping function, and a pilot insertion function. In the FFT unit 66, the arithmetic processing is transitioned to the IFFT (Inverse Fast Fourier Transform) function for transmission. The preamble control unit 68 transitions the arithmetic processing to the preamble insertion function to insert the preamble. The filter unit 64 transitions the arithmetic processing to the filter function. The AD/DA interface control unit 61 transitions the arithmetic processing to the DA interface function to convert digital signals into analog signals. In addition, the selector 8 is switched at the same time, via the instruction and command line. For example, when performing the IFFT calculation in the FFT unit 66, switching is performed because the number of input signals differ to that when performing the FFT calculation. Furthermore, the arithmetic processing modules 3 which are not used for transmission are not connected.

Next, the transmission processing is described by the block diagram in Fig. 7. In Step S71, data transferred from the MAC is received by the MAC interface 612 and the data is sent to the FEC unit 611. The data sent to the FEC unit 611 is scrambled in Step S72 and convolution coded in Step S73. Subsequently, the processing in Step S74 to S77 is performed in the reconfigurable circuit3 610. The puncturing processing in S74, the interleaving processing in S75, the mapping in S76, and the pilot insertion processing in S77 are performed.

Next, in Step S78, the IFFT (Inverse Fast Fourier Transform) processing is performed in the FFT unit 66 and the preamble is inserted in the preamble control unit 68 in Step S79. Then, filtering is performed by the filter unit 64 in Step S710, and the transmission data is sent to the DAC (digital to analog converter) in the AD/DA interface control unit 61 in Step S711.

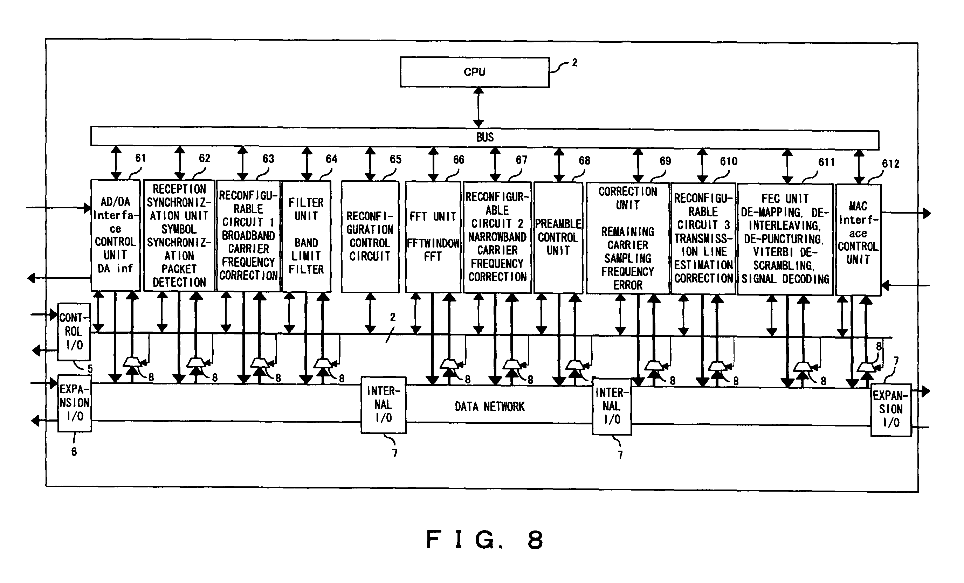

FIG. 8 is a diagram showing the functions of each arithmetic processing module 3 when receiving by IEEE802.11a. Each arithmetic processing module 3 shown in Fig. 8 indicates the state of each unit when transitioning from a transmission state to a reception state.

The state of the afore-mentioned respective arithmetic processing modules 3 is, for example, set in advance such that the reception state is state 02 and the transmission state is state 01. As shown in Fig. 4, if the transition condition for the next state in the transition from state 02 to state 01 is fulfilled, the corresponding output information is selected and state transition control information is output to each arithmetic processing module 3. Then, each arithmetic processing module 3 receives the output information for transition to transmission included in the state transition control signal and the contents of each arithmetic unit are changed.

The AD/DA interface control unit 61 receives reception data which has been converted from an analog signal to a digital signal and transitions such as to perform control to send this data to the filter unit 64. The filter unit 64 transitions such as to be configured with a digital filter such as a BPF (band pass filter) or a LPF (low pass filter) to limit bandwidth. In the reception synchronization unit 62, a transition is made to the arithmetic processing for detecting a symbol synchronization packet. In the reconfigurable circuit1 63, a transition for performing broadband carrier frequency correction is made. In the reconfigurable circuit2 67, a transition for performing narrowband carrier frequency correction is made. In the FFT unit 66, a transition is made such that a window function (such as a Kaiser window) is applied and, subsequently, an FFT calculation is performed. In the reconfigurable circuit3 610, a transition for performing an arithmetic processing for transmission line correction is made.

In correction unit 69, a transition for performing a remaining carrier sampling frequency error correction is made. In the FEC unit 611, a transition for performing de-mapping, de-interleaving, de-puncturing, Viterbi, de-scrambling, and signal decoding and performing a demodulation calculation is made. Then, the MAC interface control unit 612 holds the function. When receiving, the selector 8 is switched at the same time, via the instruction and command line, and arithmetic processing modules 3 not used for reception are not connected. If the arithmetic processing modules 3 are used for transmission but not used for reception or vice versa, these arithmetic processing modules 3 maintain their states. They are stopped until an operation mode requires arithmetic processing modules 3.

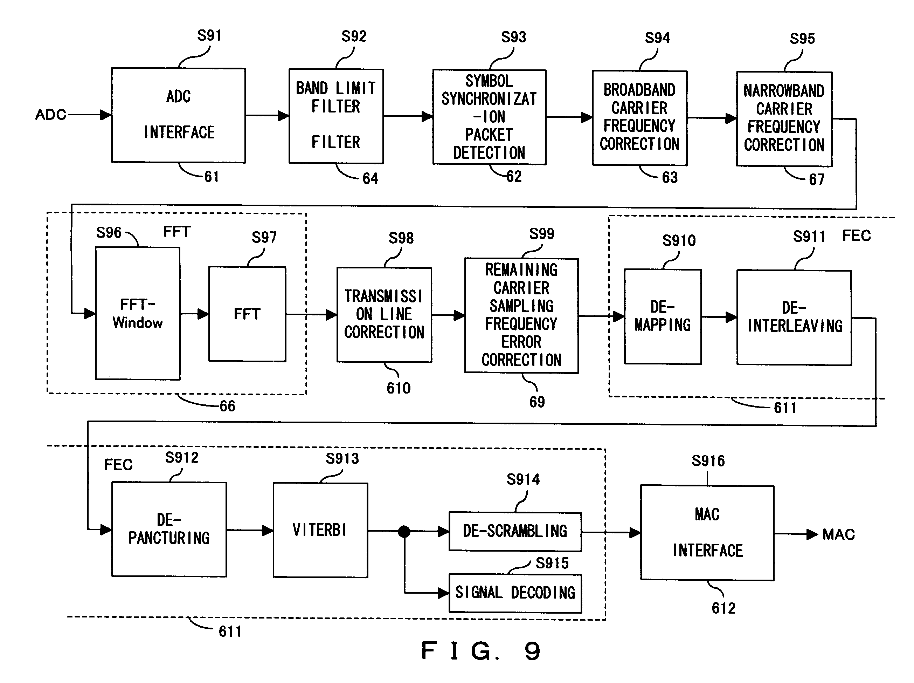

The reception processing is explained in Fig. 9. In Step S91, the reception signal received by the ADC (analog to digital converter) is converted into digital data and passed to the AD/DA interface control unit 61. In Step S92, a band limiter (such as a filter) is applied in the filter unit 64. In Step S93, the symbol synchronization packet detection is performed and, in Step S94 and in Step S95, broadband and narrowband carrier frequency correction is performed.

In Step S96, the window function is applied and, in Step S97, the FFT arithmetic processing is performed.

The transmission line correction is performed in Step S98 and the remaining carrier sampling frequency error correction is performed in Step S99. De-mapping is performed in Step S910, the de-interleaving processing is performed in Step S911, the de-puncturing processing is performed in Step S912, and the Viterbi operation is performed in Step S913. De-scrambling is performed in Step S914, signal decoding is performed in Step S915, and the reception data demodulated by S14 is MAC interface-controlled and passed to the MAC unit in Step S916.

By the configuration above, the configuration of the reconfigurable LSI can be controlled autonomously and efficiently according to a desired sequence, and additionally, the circuit scale can be reduced in comparison with general-use state transition circuit having similar functionality. Furthermore, by employing multiple connections arithmetic processing of a large-scale application can be executed efficiently.

### (Second Embodiment)

When a multiple chip configuration is formed using a plurality of reconfigurable LSI, the reconfiguration of each LSI is controlled. In this case, the master reconfiguration control circuit 105 of a reconfigurable LSI 101 which is set as master provides all instructions.

The reconfigurable LSIs 102 to 104 which are slaves provide instructions to respective arithmetic processing modules 3 within the slave reconfigurable LSIs 102 to 104, based on the state information of the master reconfigurable LSI 101.

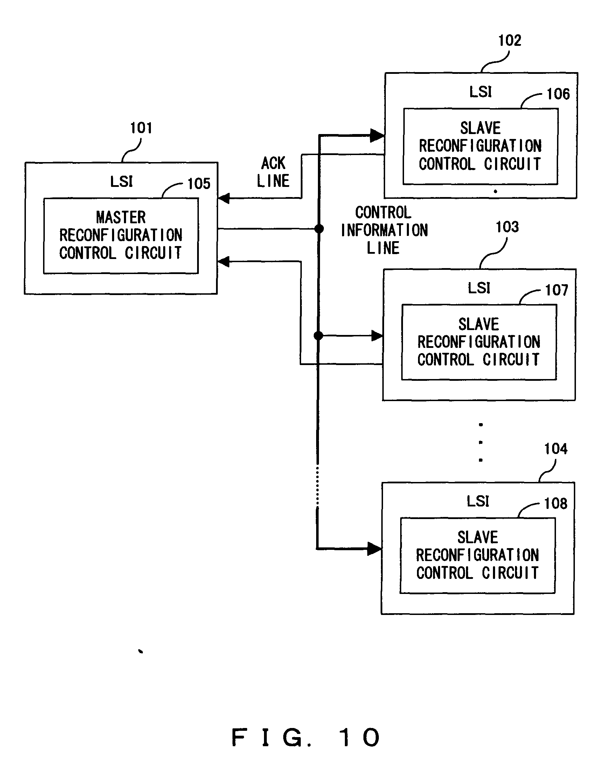

Fig. 10 is a diagram showing a configuration when multiple chips are used. When the condition which is enabled as the transition condition in the current state is fulfilled, the master reconfigurable LSI 101 transitions the state to the next state (STxx: information indicating the state subsequent to the state transition information and is shown as ST01, for example) and at the same time, notifies respective internal arithmetic processing modules 3 of the information stated in the condition along with the Enable signal. The slave reconfigurable LSIs 102 to 104 are notified of the next state (STxx) along with the Enable signal.

16-word information equivalent to STxx is read from within the reconfiguration control circuit 105 on the master-side and the setting information is stored in the internal register 33. When all ACK signals have been received, Enable = '0'.

On the slave side, the internal state is changed to the next state (STxx) shown by the master reconfigurable LSI 101 with the reception of state change (Enable = '0') from the master reconfigurable LSI 101 as the trigger. The respective internal arithmetic processing modules 3 are notified of the output information, when a transition is made to the next state (STxx) , held in the register 33, along with the Enable. The slave reconfigurable LSIs 102 to 104 which have received the notification read out the 16-word information equivalent to STxx of the internal register 33 on the slave-side from the content of this notification and store the information in the internal registers 33 of the reconfiguration control circuits 106 to 108 on the slave-side.

Then, after each slave reconfigurable LSI 102 to 104 completes the reconfiguration to the next state and each reconfiguration control circuit 106 to 108 on the slave-side receives all ACK signals, the Enable of the internal module equals '0' and, at the same time, the master reconfigurable LSI 101 is notified that ACK = '1'. ACK = '0' after detecting that the Enable from the master reconfigurable LSI 101 is '0'.

Here, the ACK lines for providing notification of an ACK is connected between the master reconfigurable LSI 101 and each of the slave reconfigurable LSIs 102 to 104, i.e. one to many communication. The control information line connects the control interface of each reconfigurable LSI. Here, the ACK line and the control information line are not limited to that in this diagram and can connect each reconfigurable LSI serially or in a daisy-chain.

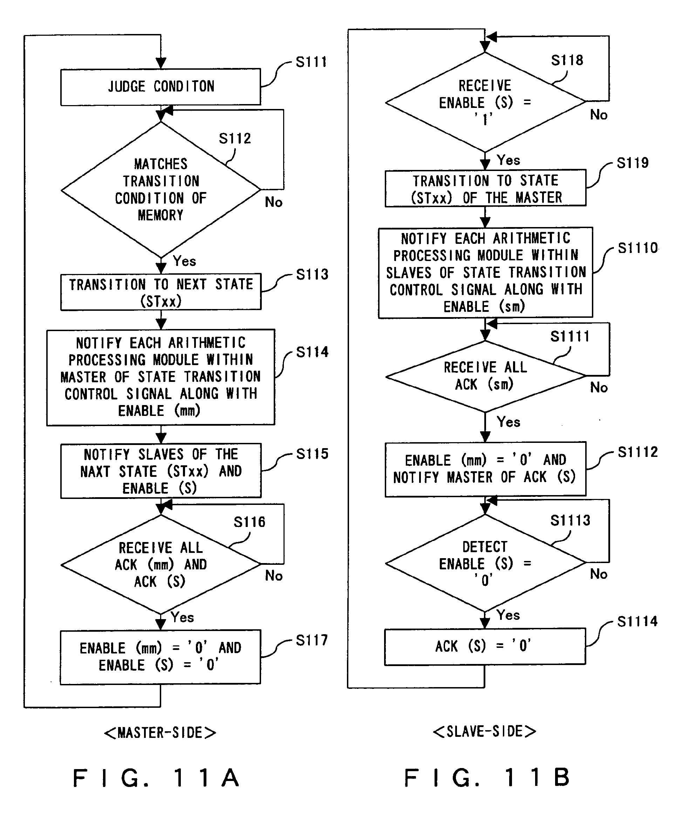

Fig. 11(a) is a control flowchart of the master-side during a multiple chip connection.

In Step S111, the reconfiguration control circuit 105 of the master reconfigurable LSI 101 judges the transition condition to the next state. In Step S112, if the transition condition of the register 33 match the condition by the judgment results from Step S111, the process advances to the processing in Step S113 (Yes). Additionally, if the conditions do not match, the current state is maintained (No).

In Step S113, transition to the next state is performed and output information for transitioning to the next state (STxx) is also selected from the register 33.

In Step S114, each arithmetic processing module 3 within the master reconfigurable LSI 101 is notified of the output information selected in S113 by the state transition control signal. In addition, each arithmetic processing module 3 is also notified of the reconfiguration instruction Enable (mm). The mm of the reconfiguration instruction Enable (mm) indicates notifying each arithmetic processing module on the master-side.

In Step S115, the slave configurable LSIs 102 to 104 are notified of the subsequent state (STxx) and the reconfiguration instruction Enable (S). The S of the reconfiguration instruction Enable (S) indicates notifying the reconfigurable LSIs 102 to 104 on the slave-side.

In Step S116, if ACK (mm) is received from all master-side arithmetic processing modules 3 and ACK (S) is also received from the slave-side, the process advances to Step S117 (Yes). If no ACKs are received, the process is determined to be in the midst of reconfiguration and waits until the ACK (mm) and ACK (S) signals are received. Here, if the signals cannot be received, an error notification is provided or the processing of the above steps is repeated.

In Step S117, the Enable (mm) and Enable (S) which are reconfiguration instructions are invalid.

Fig. 11 (b) shows a control flowchart of the slave-side of a multiple chip connection.

On the slave-side, the notification transferred in S115 is received by each slave reconfigurable LSI 102 to 104 via the control information line shown in Fig. 10.

In Step S118, the slave reconfigurable LSIs 102 to 104 receive Enable = '1' (valid) transmitted from the master reconfigurable LSI 101. In Step S119, the output information for transitioning to the next state is selected from the register 33 on the slave-side based on the information indicating the next state (STxx) on the master-side transmitted in S115.

In Step S1110, transition to the next state (STxx) of which notification was given from the master-side is performed. In addition, the state transition control signal is transmitted to each arithmetic processing module 3 on the slave-side along with the reconfiguration instruction Enable (sm). The sm of the reconfiguration instruction Enable (sm) indicates notification to each arithmetic processing module 3 on the slave-side. Then, reconfiguration of the slave-side is performed.

In Step S1111, the process advances to Step S1112 (Yes), when the ACK (sm) is received from all arithmetic processing modules 3 on the slave-side. If the signal is not received, the process waits for reception (No). In Step S1112, the reconfiguration instruction Enable (mm) = '0' and a slave-side transition completion notification ACK (S) is transmitted to the master reconfigurable LSI 101. In the Step S1113, the process advances to Step S1114 (Yes), when the reconfiguration instruction Enable (S) = '0' is detected. If it is not detected, the process waits until detection (No). Since the reconfiguration was completed in Step S1114, ACK (S) = '0'.

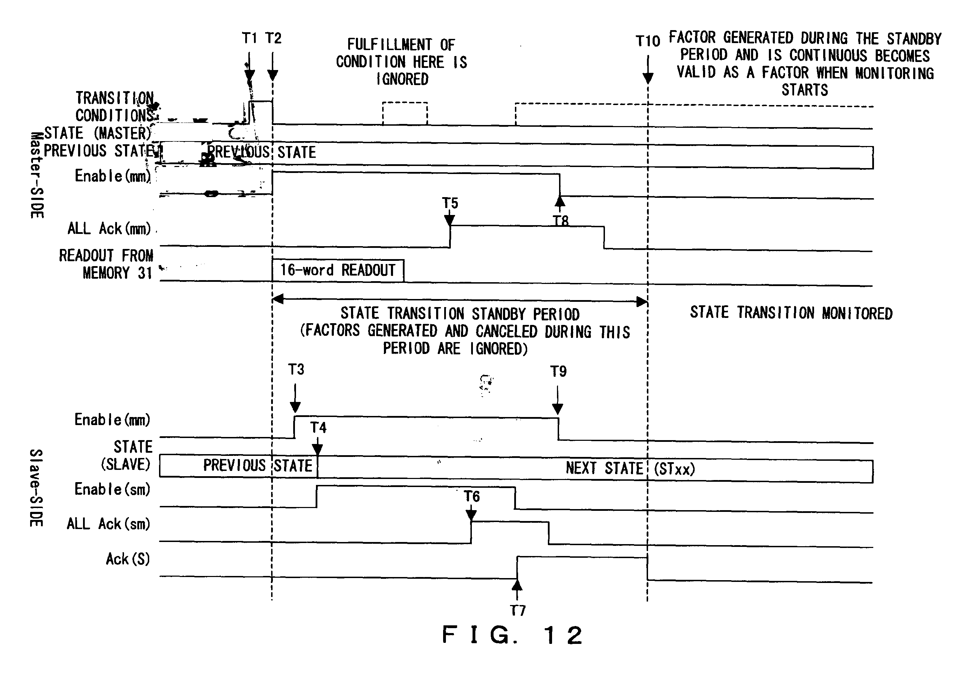

Next, the timing chart in Fig. 12 shows the temporal relationship between the master-side and the slave-side. The transition condition for transitioning the operation mode is sent to the master reconfigurable LSI 101 from the master-side arithmetic processing module and each slave reconfigurable LSI 102 to 104, via the state condition line. Then, the transition condition in the register 33 within the reconfiguration control circuit 105 on the master-side and each transition condition sent from the arithmetic processing module 3 and the slave-side are compared and judged. If the transition conditions match as a result of the judgment, the transition to the next state is performed. The processing in Steps S111 to S115 of Fig. 11 is performed within the range indicated by T1 and T2 in Fig. 12, in the section wherein the transition condition has changed from "low" to "high".

The reconfiguration of the master-side starts from T2. In addition, the transition condition and output information of the state during reconfiguration are read out from the memory 31 of the state transition factor judgment unit 32 and written to the register 33 (16-word readout).

In addition, the state transition information and configuration instruction Enable (S) transmitted from the master-side in S115 are received by each slave-side.

After reception, Enable (S) = '1' in T3 as indicated in S118, and the processing from S119 to S1110 are completed by T4. After T4, reconfiguration is started. In addition, the transition condition and output information of the state during reconfiguration are read out from the memory 31 of the state transition factor judgment unit 32 and written to the register 33.

Since all reconfigurations on the master-side are completed, all ACK (mm) signals are held "high" at T5 (S116) .

Since all reconfigurations on the slave-side are completed, all ACK (sm) signals are held "high" at T6 (s1111).

Between T7 and T8, the reconfiguration instruction Enable (sm) becomes '0' due to receiving ACK (sm) and the slave-side transition completion notification ACK (S) is held "high" (S1112). Then, the processing indicated in S116 is performed.

As a result, the processing in S117 is performed at T8 and T9. In addition, the reconfiguration instruction Enable (S) = '0' is detected (S113) and ACK (S) is held "low" (S1114). Then, all ACK (mm) are held "low".

In addition, the transition condition is ignored even if it is fulfilled between T2 and T10. In other words, the factor for transition which is generated during reconfiguration (standby period) and maintained becomes enabled when the state transition monitoring after T10 in the diagram starts.

By the configuration above, a large-scale application can be configured with a plurality of reconfigurable LSIs.

In addition, the present invention is not limited to the embodiments above and various improvements and modifications may be made without departing from the spirit of the present invention.

## Claims

1. A reconfigurable LSI which can actualize a plurality of functions by reconfiguration based on configuration information and comprises at least a plurality of arithmetic processing modules, having:
state information indicating the transition of the function from a previous state to the next state, transition condition information indicating the condition for transitioning from the previous state to the next state, and output information for switching the connection between the arithmetic processing module (3) corresponding to the transition condition and the data network connected to the arithmetic processing module (3) , and a reconfiguration control circuit(2) which transmits the output information corresponding to the next state to a selector (8) for switching between the arithmetic processing module(3) and the data network when the condition for transition is received from the arithmetic processing module(3) and matches the condition of the transition condition information.

2. The reconfigurable LSI according to claim 1, wherein said reconfiguration control circuit(2) has a memory, stores said next-state information in the address direction, stores transition condition information and output information to a first memory(31) in the bit direction corresponding to said next-state information, reads out the transition condition information and the output information corresponding to the next-state information with the same previous state from the first memory(31) and stores to a second memory(33) every time a reconfiguration is started, and transmits the output information of the corresponding second memory(33) to said selector(8) for switching between said arithmetic processing module(3) and said data network when the condition for transition is received from the arithmetic processing module (3) and matches the transition condition in the second memory(33).

3. The reconfigurable LSI according to claim 2, wherein transition condition enable information is provided for at least every condition composing said transition condition information and every output condition comprising said output information and the condition wherein the transition condition enable information is enabled can be the condition to the next state or said output condition.

4. The reconfigurable LSI according to claim 2, wherein an enable bit is provided to indicate whether said next-state information, said transition condition information, and said output information stored in each address of said first memory (31) are enabled or disabled; said next-state information, said transition condition information, and said output information within said address are enabled if the enable bit is enabled; and said next-state information, said transition condition information, and said output information within said address are disabled if the enable bit is disabled.

5. The reconfigurable LSI according to claim 2, wherein:
said next-state information, said transition condition information, and said output information stored in said first memory (31) is grouped according to said next-state information with said same previous state;
transition condition enable information is provided for at least every condition composing said transition condition information and every output condition composing said output information for every said group and the condition wherein the transition condition enable information is enabled is the condition of said next state or said output condition; and
an enable bit is provided to indicate whether said next-state information, said transition condition information, and said output information stored in each address of each said group are enabled or disabled; said next-state information, said transition condition information, and said output information within said address are enabled if the enable bit is enabled; and said next-state information, said transition condition information, and said output information within said address are disabled if the enable bit is disabled.

6. The reconfigurable LSI according to claim 1, wherein said arithmetic processing module (3) transmit an ACK signal to said reconfiguration control circuit(2) for notifying that the transition to said next state has been completed.

7. A reconfigurable LSI which can actualize a plurality of functions by reconfiguration based on configuration information which uses, in a plural multiple-chip configuration, reconfigurable LSI comprising at least a plurality of arithmetic processing modules(3), having:
state information indicating the transition of the function from a previous state to the next state, transition condition information indicating the condition for transitioning from the previous state to the next state, and output information for switching the connection between the arithmetic processing module(3) corresponding to the transition condition and the data network connected to the arithmetic processing module(3), and a reconfiguration control circuit(2) which transmits the output information corresponding to the next state to a selector (8) for switching between the arithmetic processing module(3) and the data network when the condition for transition is received from the arithmetic processing module and matches the condition of the transition condition information.

8. The reconfigurable LSI according to claim 7, wherein said reconfigurable LSIs are divided into a master-side(105) and slave-side (106,107,108), said reconfiguration control circuit on the master-side(105) and said reconfiguration control circuits on the respective slave-sides(106,107,108) are connected, and said reconfiguration control circuit on the master-side(105) can give transition instructions to the slave-side.

9. The reconfigurable LSI according to claim 8, wherein:
said reconfiguration control circuit on the master-side(105) and said reconfiguration circuits on the slave-side(106,107,108) at least transmit said transition condition information and said output information from said reconfiguration control circuit on the master-side (105) to said reconfiguration control circuits on the slave-side(106,107,108), and
receive said transition condition information and said output information in said reconfiguration circuits on the slave-side(106,107,108), and transition said selector(8) for switching between said arithmetic processing module (3) and said data network within said reconfigurable LSIs on the slave-side (106,107,108) to said next state based on each said received information.

10. The reconfigurable LSI according to claim 8, wherein said arithmetic processing module(3) within said reconfigurable LSIs on the slave-side (106, 107, 108) transmits anACK signal for providing notification that said transition to the next state has been completed and transmits a slave-side transition completion notification ACK signal for providing notification that all transitions on said slave-side(106,107,108) have been completed to said reconfiguration control circuit of said reconfigurable LSI on the master-side(105) after said reconfiguration control circuit receives said ACK signal.

11. The reconfigurable LSI according to claim 8, wherein said ACK signal and said slave transition completion notification ACK signal share a line for said transmitting transition condition information and said output information.

12. The reconfigurable LSI according to claim 1, wherein when there is a plurality of said transition conditions, the transition can be performed when any one condition is met.

13. The reconfigurable LSI according to claim 1, wherein when a plurality of said transition conditions is met simultaneously, the condition written to the higher-order address is prioritized, the transition is performed to this state, and the output information is outputted; and the current state is maintained when there are no matches to any conditions.

14. The reconfigurable LSI according to claim 1, wherein said reconfigurable LSI ignores transition conditions matching during said reconfiguration and enables said transition condition after the reconfiguration is completed when the transition conditions match during said reconfiguration.
